# FASCICULE DE BREVET EUROPEEN

(11) **EP 2 446 578 B1**
(45) Date de publication et mention de la délivrance du brevet: **02.08.2017**
(21) Numéro de dépôt: 10719346.8
(22) Date de dépôt: 12.05.2010
(51) Int. Cl.: H04L 9/08

(54) **PROCÉDÉ ET SYSTEME D'ACCES A DES DONNEES MEDICALES**
VERFAHREN UND SYSTEM FÜR DEN ZUGRIFF AUF MEDIZINISCHE DATEN
METHOD AND SYSTEM FOR ACCESSING MEDICAL DATA

(30) Priorité: 24.06.2009 FR 0903061
(43) Date de publication de la demande: 02.05.2012
(73) Titulaire: ALCATEL LUCENT, 92100 Boulogne-Billancourt (FR)
(72) Inventeur: HEBBAR, Abdelkrim, F-91620 Nozay (FR); MAARADJI, Abderrahmane, F-91620 Nozay (FR)
(74) Mandataire: Mouney, Jérôme
(86) Numéro de dépôt international: PCT/EP2010/056598
(87) Numéro de publication internationale: WO 2010/149428

(56) Documents cités:
- EP-A- 1 322 086
- WO-A-2007/120548
- MENEZES, VANSTONE, OORSCHOT: "Handbook of Applied Cryptography" 1997, CRC PRESS LLC , USA , XP000863995 page 490 - page 494 page 505 page 510 - page 511 page 546 - page 554

## Description

La présente invention concerne un système d'accès à des données médicales.

Actuellement, des fichiers médicaux sont disponibles sous format papier ou numérique. Ces fichiers sont très utiles en cas de situation d'urgence, tel qu'un accident sur la route ou à domicile, lorsque du personnel médical d'urgence doit être informé au sujet du contexte médical d'une personne victime d'un accident.

Il existe des cartes à puce contenant, de manière chiffrée, des fichiers médicaux et des informations pour contacter un médecin s'occupant de la personne possédant la carte à puce. Cependant, ce type de solution perd toute utilité si la personne n'est plus en mesure de donner sa carte à puce ou d'indiquer l'endroit où la carte peut être trouvée. Par ailleurs, le personnel médical doit obligatoirement être équipé d'un lecteur adapté à ce type de carte à puce.

Il existe également des solutions selon lesquelles une personne peut envoyer à une équipe médicale directement son fichier médical ou une adresse URL ("Uniform Resource Locator" en anglais) permettant d'accéder au fichier médical à l'aide d'un certificat. De même, ce type de solution perd d'une part toute utilité si la personne, en perdant conscience, ne peut effectuer des opérations requises par elle-même, et présente d'autre part des risques de confidentialité sur le fichier médical.

Il existe un besoin de fournir le fichier médical d'une personne, quel que soit son état et ses capacités de communiquer, à du personnel médical autorisé.

Un objectif de l'invention est de remédier aux inconvénients précédents en proposant un système d'accès à des données médicales apte à fournir des données médicales relatives à une personne, dans tout type de situation, tout en préservant le secret médical de la personne.

Pour atteindre cet objectif, un procédé pour accéder à des données médicales d'un utilisateur mémorisées dans un terminal mobile de l'utilisateur ayant émis un appel d'urgence vers un centre d'appel à travers un réseau de télécommunications, comprend les étapes suivantes dans un serveur de communication :
après une transmission d'un identificateur de l'utilisateur depuis le terminal mobile au centre d'appel, une attribution d'une personne autorisée à l'utilisateur dans le centre d'appel, et une transmission d'un identificateur de la personne autorisée et de l'identificateur de l'utilisateur depuis le centre d'appel au serveur de communication, générer une clé en fonction de l'identificateur de la personne autorisée et de l'identificateur de l'utilisateur dans le serveur de communication,
transmettre la clé au terminal mobile et à un terminal de la personne autorisée depuis le serveur de communication, afin de déverrouiller l'accès aux données médicales au moyen de la clé.

Avantageusement, l'utilisateur a toujours le contrôle de ses données médicales qui ne peuvent plus être accédées après l'intervention de l'équipe médicale. Les données médicales peuvent être accédées seulement par une entité autorisée : l'utilisateur ou la personne autorisée qui peut être membre d'une équipe médicale. Aucun message ne peut être intercepté par une entité tierce excepté l'équipe médicale.

Selon d'autres caractéristiques de l'invention, la personne autorisée peut saisir la clé dans le terminal mobile qui vérifie que la clé saisie correspond à la clé reçue depuis le serveur de communication, ou le terminal de la personne autorisée peut transmettre la clé reçue depuis le serveur de communication au terminal mobile via une liaison sans fil de courte portée qui vérifie que la clé reçue depuis le terminal de la personne autorisée correspond à la clé reçue depuis le serveur de communication.

Selon une autre caractéristique de l'invention, le serveur de communication peut transmettre en outre un identificateur du terminal de la personne autorisée au terminal mobile, le terminal mobile peut transmettre les données médicales et la clé reçue depuis le serveur de communication au terminal de la personne autorisée qui vérifie que la clé reçue depuis le terminal mobile correspond à la clé reçue depuis le serveur de communication.

Selon une autre caractéristique de l'invention, le centre d'appel peut transmettre l'identificateur de l'utilisateur à un terminal de la personne autorisée, et le terminal de la personne autorisée peut transmettre un identificateur de la personne autorisée et l'identificateur de l'utilisateur au centre d'appel qui retransmet les identificateurs au serveur de communication.

L'invention concerne également un terminal pour accéder à des données médicales d'un utilisateur mémorisées dans un terminal mobile de l'utilisateur ayant émis un appel d'urgence vers un centre d'appel à travers un réseau de télécommunications, caractérisé en ce qu'il comprend :
des moyens pour transmettre un identificateur de l'utilisateur au centre d'appel qui attribue une personne autorisée à l'utilisateur et transmet un identificateur de la personne autorisée et l'identificateur de l'utilisateur à un serveur de communication, ce dernier générant une clé en fonction de l'identificateur de la personne autorisée et de l'identificateur de l'utilisateur et transmettant la clé à un terminal de la personne autorisée et au terminal mobile,
des moyens pour recevoir la clé transmise par le serveur de communication, et
des moyens pour déverrouiller l'accès aux données médicales au moyen de la clé.

L'invention concerne également un centre d'appel pour accéder à des données médicales d'un utilisateur mémorisées dans un terminal mobile de l'utilisateur ayant émis un appel d'urgence vers le centre d'appel à travers un réseau de télécommunications, caractérisé en ce qu'il comprend :
des moyens pour attribuer une personne autorisée à l'utilisateur, après avoir reçu un identificateur de l'utilisateur transmis depuis le terminal mobile, et
des moyens pour transmettre un identificateur de la personne autorisée et l'identificateur de l'utilisateur à un serveur de communication qui génère une clé en fonction de l'identificateur de la personne autorisée et de l'identificateur de l'utilisateur et transmet la clé au terminal mobile et à un terminal de la personne autorisée, afin de déverrouiller l'accès aux données médicales au moyen de la clé.

L'invention concerne encore un serveur de communication pour accéder à des données médicales d'un utilisateur mémorisées dans un terminal mobile de l'utilisateur ayant émis un appel d'urgence vers un centre d'appel à travers un réseau de télécommunications, caractérisé en ce qu'il comprend :
des moyens pour générer une clé en fonction de l'identificateur d'une personne autorisée et de l'identificateur de l'utilisateur transmis depuis le centre d'appel, qui a attribué une personne autorisée à l'utilisateur après avoir reçu un identificateur de l'utilisateur transmis depuis le terminal mobile, et
des moyens pour transmettre la clé au terminal mobile et à un terminal de la personne autorisée, afin de déverrouiller l'accès aux données médicales au moyen de la clé.

La présente invention et les avantages qu'elle procure seront mieux compris au vu de la description ci-après faite en référence aux figures annexées, dans lesquelles :
- la figure 1 est un bloc-diagramme schématique d'un système d'accès à des données médicales selon une réalisation de l'invention, et
- la figure 2 est un algorithme d'un procédé d'accès à des données médicales selon une réalisation de l'invention.

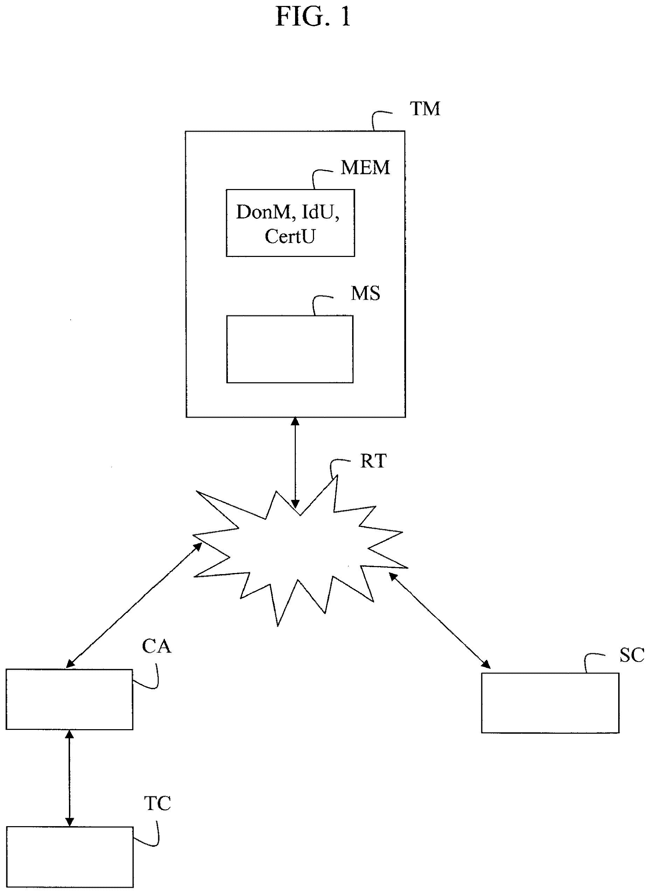

En référence à la figure 1, un système d'accès à des données médicales comprend un terminal mobile TM, un centre d'appel CA, un serveur de communication SC, aptes à communiquer entre eux à travers un réseau de télécommunications RT.

Le réseau de télécommunications RT peut comprendre un réseau sans fil, tel qu'un réseau de radiocommunication cellulaire numérique de type GSM (« Global System for Mobile communications » en anglais) ou UMTS (« Universal Mobile Télécommunications System » en anglais). Le réseau de télécommunications RT peut être connecté à un réseau de paquets de type IMS ("IP Multimédia Subsystem" en anglais). Par ailleurs, le réseau de télécommunications RT peut comprendre un réseau filaire ou être une combinaison de réseaux filaires et sans fil.

Selon un exemple, un terminal mobile TM est un terminal de radiocommunications cellulaire mobile, relié par un canal de radiocommunication à un réseau d'accès comprenant le réseau fixe d'un réseau de radiocommunications, par exemple de type GSM ou UMTS.

Selon un autre exemple, un terminal mobile TM comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais).

Optionnellement, le terminal mobile TM est apte à communiquer via une liaison sans fil de courte portée de type WiFi ou Bluetooth.

Le terminal mobile TM contient dans une mémoire MEM des données médicales DonM relatives à l'utilisateur et un identificateur d'utilisateur IdU, et optionnellement un certificat d'utilisateur. Puisque les données médicales relatives à l'utilisateur sont mémorisées dans le terminal mobile, l'identificateur d'utilisateur IdU peut être un identificateur spécifique au terminal mobile. Il est considéré que les données médicales relatives à l'utilisateur contiennent des informations sur la santé et le passé médical de l'utilisateur qui sont nécessaires et suffisantes à des équipes médicales pour assurer des soins à l'utilisateur. Les données médicales sont mémorisées de manière chiffrée, et ne peuvent être déchiffrées qu'après un déverrouillage de leur accès au moyen d'une clé unique Ku délivrée par le serveur de communication SC. Les données médicales peuvent être une copie d'une partie du dossier médical de l'utilisateur

Le terminal mobile TM contient un module de sécurité MS qui est apte à détecter tout appel d'urgence et automatiquement transmettre des informations au centre d'appel. En particulier, le module de sécurité MS peut chiffrer l'identificateur d'utilisateur IdU au moyen du certificat CertU et transmettre l'identificateur chiffré au centre d'appel. Par ailleurs, le module de sécurité MS verrouille l'accès aux données médicales DonM et ne peut déverrouiller cet accès qu'au moyen d'une clé unique délivrée par le serveur de communication SC.

Le centre d'appel CA est par exemple un commutateur PABX ("Private Automatic Branch eXchanger" en anglais) dimensionné pour des trafics importants et spécifiques. Le centre d'appel CA peut être un centre d'appel d'urgence ou de secours dont le numéro d'appel est le 911 aux Etats-Unis et au Canada, ou le 112 en Europe.

Le centre d'appel CA est relié à ou apte à communiquer avec des terminaux de communication TC d'une ou plusieurs équipes médicales associées au centre d'appel et comprenant des personnes, telles que des médecins, autorisées à accéder à des données médicales d'utilisateurs.

Le serveur de communication SC est par exemple géré par un opérateur de télécommunications, une autorité gouvernementale, ou encore un organisme de santé. Plus généralement, le serveur de communication peut être géré par un tiers de confiance qui désigne au préalable les personnes autorisées à accéder à des données médicales d'utilisateurs. Par exemple, une seule personne d'une équipe médicale est autorisée par le tiers de confiance à accéder aux données médicales de l'utilisateur possédant le terminal mobile. A cette fin, le serveur de communication délivre une clé unique Ku à ladite personne autorisée.

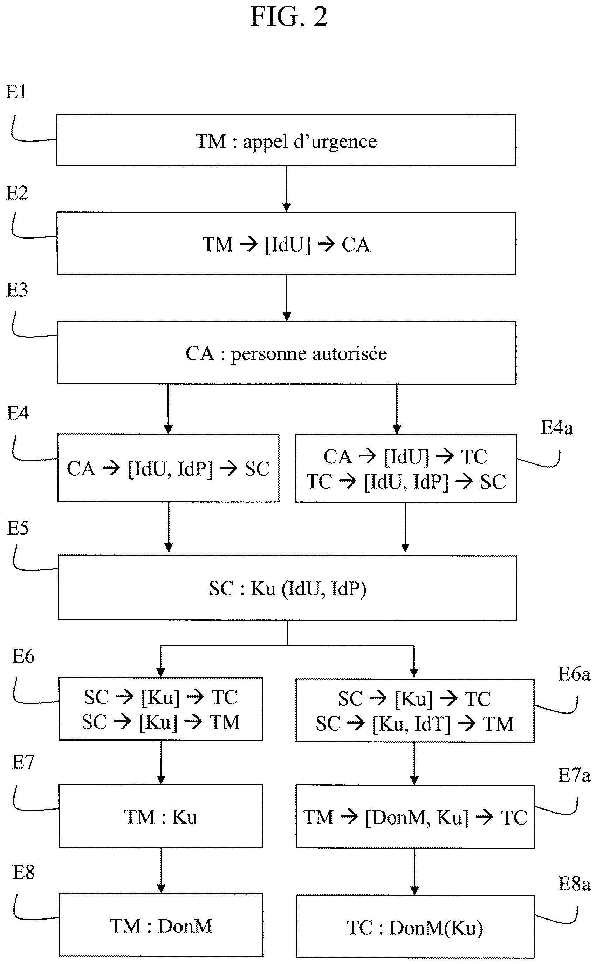

En référence à la figure 2, un procédé pour accéder à des données médicales relatives à un utilisateur selon une réalisation de l'invention comprend des étapes E1 à E8.

Initialement, l'utilisateur du terminal mobile est par exemple victime d'un accident pour lequel il est nécessaire d'alerter une équipe médicale. Il est supposé qu'une personne témoin de l'accident porte secours à l'utilisateur.

A l'étape E1, ladite personne témoin prend possession du terminal mobile TM de l'utilisateur et compose un numéro d'appel d'urgence, tel que le 112, afin d'établir une communication avec un centre d'appel, c'est-à-dire le centre d'appel CA détecté automatiquement en fonction de la localisation du terminal mobile TM.

A l'étape E2, le module de sécurité MS transmet l'identificateur d'utilisateur IdU mémorisé dans le terminal mobile TM au centre d'appel CA. Optionnellement, l'identificateur d'utilisateur IdU est préalablement chiffré au moyen d'un certificat d'utilisateur. Le centre d'appel CA reçoit ainsi à la fois un appel vocal et des données comprenant l'identificateur IdU.

A l'étape E3, le centre d'appel CA attribue une personne autorisée à l'utilisateur et recherche un profil de la personne autorisée, après avoir éventuellement déchiffré l'identificateur à l'aide d'une clé publique correspondant au certificat d'utilisateur si ce dernier a été chiffré. La personne autorisée peut faire partie d'une équipe médicale prête à intervenir auprès de l'utilisateur victime de l'accident. Ledit profil contient notamment différentes informations sur des moyens de communiquer avec la personne autorisée, tels que des numéros de téléphone ou des adresses de messagerie électronique. La personne autorisée peut avoir plusieurs terminaux de communication, tels qu'un ordinateur personnel ou un téléphone fixe lorsque la personne autorisée se trouve à son lieu de travail, et un terminal mobile lorsque la personne autorisée est en déplacement ou également à son lieu de travail.

A l'étape E4, après avoir attribué une personne autorisée à l'utilisateur afin d'accéder aux données médicales de l'utilisateur, le centre d'appel CA transmet l'identificateur d'utilisateur IdU et un identificateur IdP de la personne autorisée au serveur de communication SC. Optionnellement, l'identificateur IdP est préalablement chiffré avec un certificat de la personne autorisée.

Dans une variante, à une étape E4a remplaçant l'étape E4, le centre d'appel CA transmet l'identificateur d'utilisateur IdU à la personne autorisée, par exemple au moyen d'un message transmis à un terminal de communication TC de la personne autorisée. La personne autorisée transmet ensuite l'identificateur d'utilisateur IdU et un identificateur IdP de la personne autorisée depuis le terminal de communication TC au serveur de communication SC, via le centre d'appel CA.

Optionnellement, le centre d'appel CA ou la personne ayant reçu l'appel d'urgence transmet des informations relatives à l'utilisateur obtenues lors de l'appel à la personne autorisée.

A l'étape E5, le serveur de communication SC génère une clé unique Ku en fonction des identificateurs IdU et IdP, éventuellement après les avoir déchiffrés si ces derniers ont été chiffrés. La clé Ku est par exemple un mot de passe généré de manière unique.

A l'étape E6, le serveur de communication SC transmet la clé unique Ku au terminal mobile TM et à un terminal de communication TC de la personne autorisée. Par exemple, le terminal de communication TC est un terminal mobile, la personne autorisée pouvant être déjà en déplacement vers le lieu où se trouve l'utilisateur.

A l'étape E7, lorsque la personne autorisée arrive auprès de l'utilisateur, la personne autorisée saisit la clé Ku, par exemple via une interface lancée automatiquement après l'établissement de l'appel d'urgence par le module de sécurité MS. Le module de sécurité MS vérifie que la clé saisie par la personne autorisée correspond à la clé reçue depuis le serveur de communication SC.

En variante, la personne autorisée transmet la clé Ku depuis son terminal de communication TC au terminal mobile TM via une liaison sans fil de courte portée.

A l'étape E8, si la clé Ku saisie par la personne autorisée correspond à la clé reçue par le terminal mobile, le module de sécurité MS déverrouille l'accès aux données médicales DonM, ces dernières étant alors déchiffrées et accessibles. La personne autorisée peut donc lire les données médicales relatives à l'utilisateur.

Dans une variante, à une étape E6a suite à l'étape E5, le serveur de communication SC transmet la clé unique Ku et un identificateur IdT d'un terminal de communication TC de la personne autorisée au terminal mobile TM et transmet la clé unique Ku au terminal de communication TC de la personne autorisée.

A une étape E7a, suite à la réception de la clé unique Ku et de l'identificateur d'un terminal de communication TC, le module de sécurité MS transmet les données médicales DonM et la clé unique Ku au terminal de communication TC.

A une étape E8a, après avoir vérifié que la clé Ku reçue depuis le terminal mobile TM correspond à la clé reçue depuis le serveur de communication SC, une application dans le terminal de communication TC déchiffre les données médicales DonM qui deviennent accessibles. La personne autorisée peut donc lire les données médicales relatives à l'utilisateur.

La personne autorisée peut ainsi prendre connaissance du dossier médical de l'utilisateur avant d'arriver auprès de l'utilisateur, ce qui améliore l'efficacité de l'intervention de l'équipe médicale.

## Revendications

1. Procédé pour accéder à des données médicales (DonM) d'un utilisateur mémorisées dans un terminal mobile (TM) de l'utilisateur ayant émis un appel d'urgence vers un centre d'appel (CA) à travers un réseau de télécommunications (RT), comprenant les étapes suivantes dans un serveur de communication (SC) :
après une transmission (E2) d'un identificateur (IdU) de l'utilisateur depuis le terminal mobile au centre d'appel (CA), une attribution (E3) d'une personne autorisée à l'utilisateur dans le centre d'appel (CA), et une transmission (E4; E4a) d'un identificateur (IdP) de la personne autorisée et de l'identificateur (IdU) de l'utilisateur depuis le centre d'appel au serveur de communication (SC), générer (E5) une clé (Ku) en fonction de l'identificateur (IdP) de la personne autorisée et de l'identificateur (IdU) de l'utilisateur dans le serveur de communication (SC),
transmettre (E6; E6a) la clé (Ku) au terminal mobile (TM) et à un terminal (TC) de la personne autorisée depuis le serveur de communication (SC), afin de déverrouiller l'accès aux données médicales (DonM) au moyen de la clé (Ku).

2. Procédé conforme à la revendication 1, selon lequel la personne autorisée saisit la clé (Ku) dans le terminal mobile (TM) qui vérifie que la clé saisie correspond à la clé reçue depuis le serveur de communication (SC).

3. Procédé conforme à la revendication 1, selon lequel le terminal (TC) de la personne autorisée transmet la clé reçue depuis le serveur de communication (SC) au terminal mobile (TM) via une liaison sans fil de courte portée, et le terminal mobile vérifie que la clé reçue depuis le terminal (TC) de la personne autorisée correspond à la clé reçue depuis le serveur de communication (SC).

4. Procédé conforme à la revendication 1, selon lequel le serveur de communication (SC) transmet en outre un identificateur (IdT) du terminal de la personne autorisée au terminal mobile (TM), le terminal mobile transmet les données médicales (DonM) et la clé reçue depuis le serveur de communication (SC) au terminal de la personne autorisée qui vérifie que la clé reçue depuis le terminal mobile (TM) correspond à la clé reçue depuis le serveur de communication (SC).

5. Procédé conforme à l'une des revendications 1 à 4, selon lequel au moins l'un de l'identificateur (IdP) de la personne autorisée et de l'identificateur (IdU) de l'utilisateur est chiffré.

6. Procédé conforme à l'une des revendications 1 à 5, selon lequel le centre d'appel transmet l'identificateur (IdU) de l'utilisateur à un terminal de la personne autorisée, et le terminal de la personne autorisée transmet un identificateur (IdP) de la personne autorisée et l'identificateur (IdU) de l'utilisateur au centre d'appel qui retransmet les identificateurs au serveur de communication (SC).

7. Terminal mobile (TM) pour accéder à des données médicales (DonM) d'un utilisateur mémorisées dans un terminal mobile (TM) de l'utilisateur ayant émis un appel d'urgence vers un centre d'appel (CA) à travers un réseau de télécommunications (RT), **caractérisé en ce qu'**il comprend :
des moyens (MS) pour transmettre un identificateur (IdU) de l'utilisateur au centre d'appel (CA) qui attribue une personne autorisée à l'utilisateur et transmet un identificateur (IdP) de la personne autorisée et l'identificateur (IdU) de l'utilisateur à un serveur de communication (SC), ce dernier générant une clé (Ku) en fonction de l'identificateur (IdP) de la personne autorisée et de l'identificateur (IdU) de l'utilisateur et transmettant la clé (Ku) à un terminal (TC) de la personne autorisée et au terminal mobile (TM),
des moyens (MS) pour recevoir la clé (Ku) transmise par le serveur de communication (SC), et
des moyens (MS) pour déverrouiller l'accès aux données médicales (DonM) au moyen de la clé (Ku).

8. Centre d'appel (CA) pour accéder à des données médicales (DonM) d'un utilisateur mémorisées dans un terminal mobile (TM) de l'utilisateur ayant émis un appel d'urgence vers le centre d'appel (CA) à travers un réseau de télécommunications (RT), **caractérisé en ce qu'**il comprend :
des moyens pour attribuer une personne autorisée à l'utilisateur, après avoir reçu un identificateur (IdU) de l'utilisateur transmis depuis le terminal mobile (TM), et
des moyens pour transmettre un identificateur (IdP) de la personne autorisée et l'identificateur (IdU) de l'utilisateur à un serveur de communication (SC) qui génère une clé (Ku) en fonction de l'identificateur (IdP) de la personne autorisée et de l'identificateur (IdU) de l'utilisateur et transmet la clé (Ku) au terminal mobile (TM) et à un terminal (TC) de la personne autorisée, afin de déverrouiller l'accès aux données médicales (DonM) au moyen de la clé (Ku).

9. Serveur de communication (SC) pour accéder à des données médicales (DonM) d'un utilisateur mémorisées dans un terminal mobile (TM) de l'utilisateur ayant émis un appel d'urgence vers un centre d'appel (CA) à travers un réseau de télécommunications (RT), **caractérisé en ce qu'**il comprend :
des moyens pour générer une clé (Ku) en fonction d'un identificateur (IdP) d'une personne autorisée et d'un identificateur (IdU) de l'utilisateur transmis depuis le centre d'appel (CA), qui a attribué une personne autorisée à l'utilisateur après avoir reçu l'identificateur (IdU) de l'utilisateur transmis depuis le terminal mobile (TM), et
des moyens pour transmettre la clé (Ku) au terminal mobile (TM) et à un terminal (TC) de la personne autorisée, afin de déverrouiller l'accès aux données médicales (DonM) au moyen de la clé (Ku).

## Patentansprüche

1. Verfahren für den Zugriff auf medizinische Daten (DonM) eines Benutzers, die in einem mobilen Endgerät (TM) des Benutzers gespeichert sind, von welchem über ein Telekommunikationsnetz (RT) ein Notruf an eine Anrufzentrale (CA) gesendet wurde, wobei das Verfahren die folgenden Schritte in einem Kommunikationsserver (SC) umfasst:
nach der Übermittlung (E2) einer Kennung (IdU) des Benutzers von dem mobilen Endgerät an die Anrufzentrale (CA), dem in der Anrufzentrale (CA) erfolgenden Zuweisen (E3) einer autorisierten Person zu dem Benutzer sowie nach einer Übermittlung (E4; E4a) einer Kennung der autorisierten Person (IdP) und der Benutzerkennung (IdU) von der Anrufzentrale an den Kommunikationsserver (SC) das Generieren (E5) eines Schlüssels (Ku) in Funktion der Kennung (IdP) der autorisierten Person und der Benutzerkennung (IdU) in dem Kommunikationsserver (SC),
das Übermitteln (E6; E6a) des Schlüssels (Ku) von dem Kommunikationsserver (SC) an das mobile Endgerät (TM) und an ein Endgerät (TC) der autorisierten Person, um anhand des Schlüssels (Ku) den Zugang zu den medizinischen Daten (DonM) freizugeben.

2. Verfahren nach Anspruch 1, wobei die autorisierte Person den Schlüssel (Ku) für das mobile Endgerät (TM) eingibt, welches verifiziert, dass der eingegebene Schlüssel mit dem vom Kommunikationsserver (SC) empfangenen Schlüssel übereinstimmt.

3. Verfahren nach Anspruch 1, wobei das Endgerät (TC) der autorisierten Person den vom Kommunikationsserver (SC) empfangenen Schlüssel über eine drahtlose Kurzstreckenkommunikationsverbindung an das mobile Endgerät (TM) übermittelt und das mobile Endgerät verifiziert, dass der vom Endgerät (TC) der autorisierten Person empfangene Schlüssel dem Schlüssel entspricht, den es vom Kommunikationsserver (SC) empfangen hat.

4. Verfahren nach Anspruch 1, wobei der Kommunikationsserver (SC) weiterhin eine Kennung (IdT) des Endgeräts der autorisierten Person an das mobile Endgerät (TM) sendet, wobei weiterhin das mobile Endgerät die medizinischen Daten (DonM) und den vom Kommunikationsserver (SC) empfangenen Schlüssel an das Endgerät der autorisierten Person sendet, welches verifiziert, dass der vom mobilen Endgerät (TM) empfangene Schlüssel dem vom Kommunikationsserver (SC) empfangenen Schlüssel entspricht.

5. Verfahren nach einem der Ansprüche 1 bis 4, wobei mindestens entweder die Kennung (IdP) der autorisierten Person oder die Benutzerkennung (IdU) verschlüsselt ist.

6. Verfahren nach einem der Ansprüche 1 bis 5, wobei die Anrufzentrale die Benutzerkennung (IdU) an ein Endgerät der autorisierten Person übermittelt, und wobei das Endgerät der autorisierten Person eine Kennung (IdP) der autorisierten Person und die Benutzerkennung (IdU) an die Anrufzentrale übermittelt, welche die Kennungen an den Kommunikationsserver (SC) übermittelt.

7. Mobiles Endgerät (TM) für den Zugriff auf medizinische Daten (DonM) eines Benutzers, die in einem mobilen Endgerät (TM) des Benutzers gespeichert sind, von welchem über ein Telekommunikationsnetz (RT) ein Notruf an eine Anrufzentrale (CA) gesendet wurde, **dadurch gekennzeichnet, dass** das mobile Endgerät (TM) umfasst:
Mittel (MS) für das Übermitteln einer Kennung (IdU) des Benutzers an die Anrufzentrale (CA), welche dem Benutzer eine autorisierte Person zuweist und eine Kennung (IdP) der autorisierten Person und die Benutzerkennung (IdU) an einen Kommunikationsserver (SC) übermittelt, wobei letzterer in Funktion der Kennung der autorisierten Person (IdP) und der Benutzerkennung (IdU) einen Schlüssel (Ku) generiert und den Schlüssel (Ku) an ein Endgerät (TC) der autorisierten Person sowie an das mobile Endgerät (TM) übermittelt,
Mittel (MS) für den Empfang des von dem Kommunikationsserver (SC) übermittelten Schlüssels (Ku), und
Mittel (MS) zur Freigabe des Zugangs zu den medizinischen Daten (DonM) anhand des Schlüssels (Ku).

8. Anrufzentrale (CA) für den Zugriff auf medizinische Daten (DonM) eines Benutzers, die in einem mobilen Endgerät (TM) des Benutzers gespeichert sind, von welchem über ein Telekommunikationsnetz (RT) ein Notruf an die Anrufzentrale (CA) gesendet wurde, **dadurch gekennzeichnet, dass** die Anrufzentrale (CA) umfasst:
Mittel, um nach dem Empfang einer von dem mobilen Endgerät (TM) gesendeten Kennung (IdU) des Benutzers dem Benutzer eine autorisierte Person zuzuweisen, und
Mittel zum Übermitteln einer Kennung (IdP) der autorisierten Person und der Benutzerkennung (IdU) an einen Kommunikationsserver (SC), der in Funktion der Kennung (IdP) der autorisierten Person und der Benutzerkennung (IdU) einen Schlüssel (Ku) generiert und den Schlüssel (Ku) an das mobile Endgerät (TM) und an ein Endgerät (TC) der autorisierten Person übermittelt, um anhand des Schlüssels (Ku) den Zugriff auf die medizinischen Daten (DonM) freizugeben.

9. Kommunikationsserver (SC) für den Zugriff auf medizinische Daten (DonM) eines Benutzers, die in einem mobilen Endgerät (TM) des Benutzers gespeichert sind, von welchem über ein Telekommunikationsnetz (RT) ein Notruf an eine Anrufzentrale (CA) gesendet wurde, **dadurch gekennzeichnet, dass** der Kommunikationsserver (SC) umfasst:
Mittel für das Generieren eines Schlüssels (Ku) in Funktion einer Kennung (IdP) einer autorisierten Person und einer Kennung (IdU) des Benutzers, die von der Anrufzentrale (CA) übermittelt wurden, welche nach dem Empfang der von dem mobilen Endgerät (TM) übermittelten Benutzerkennung (IdU) dem Benutzer eine autorisierte Person zugewiesen hatte, und
Mittel für das Übermitteln des Schlüssels (Ku) an das mobile Endgerät (TM) und an ein Endgerät (TC) der autorisierten Person, um anhand des Schlüssels (Ku) den Zugang zu den medizinischen Daten (DonM) freizugeben.

## Claims

1. A method for accessing medical data (DonM) of a user saved in a mobile terminal (TM) of the user that issued an emergency call to a call centre (CA) over a telecommunications network (RT), comprising the following steps in a communication server (SC):
after a transmission (E2) of an identifier (IdU) of the user from the mobile terminal to the call centre (CA), an assignment (E3) of an authorized person to the user in the call centre (CA), and a transmission (E4; E4a) of an identifier (IdP) of the authorized person and of the identifier (IdU) of the user from the call centre to the communication server (SC), generating (E5) a key (Ku) based on the identifier (IdP) of the authorized person and on the identifier (IdU) of the user within the communication server (SC),
transmitting (E6; E6a) the key (Ku) to the mobile terminal (TM) and to a terminal (TC) of the authorized person from the communication server (SC), in order to unlock access to the medical data (DonM) by means of the key (Ku).

2. A method according to claim 1, whereby the authorized person enters the key (Ku) into the mobile terminal (TM) which checks that the entered key matches the key received from the communication server (SC).

3. A method according to claim 1, whereby the terminal (TC) of the authorized person transmits the key received from the communication server (SC) to the mobile terminal (TM) via a short-range wireless link, and the mobile terminal verifies that the key received from the terminal (TC) of the authorized person matches the key received from the communication server (SC).

4. A method according to claim 1, whereby the communication server (SC) additionally sends an identifier (IdT) of the terminal of the authorized person to the mobile terminal (TM), the mobile terminal transmits the medical data (DonM) and the key received from the communication server (SC) to the terminal of the authorized person, which checks that the key received from the mobile terminal (TM) matches the key received from the communication server (SC).

5. A method according to one of the claims 1 to 4, whereby at least either the identifier (IdP) of the authorized person or the identifier (IdU) of the user is encrypted.

6. A method according to one of the claims 1 to 5, whereby the call centre transmits the identifier (IdU) of the user to a terminal of the authorized person, and the terminal of the authorized person transmits an identifier (IdP) of the authorized person and the identifier (IdU) of the user to the call centre, which retransmits the identifiers to the communication server (SC).

7. A mobile terminal (TM) for accessing medical data (DonM) of a user saved in a mobile terminal (TM) of the user that issued an emergency call to a call centre (CA) over a telecommunications network (RT), **characterized in that** it comprises:
means (MS) for transmitting an identifier (IdU) of the user to the call centre (CA), which assigns an authorized person to the user and transmits an identifier (IdP) of the authorized person and the identifier (IdU) of the user to the communication server (SC), which generates a key (Ku) based on the identifier (IdP) of the authorized person and on the identifier (IdU) of the user and transmits the key (Ku) to a terminal (TC) of the authorized person and to the mobile terminal (TM),
means (MS) for receiving the key (Ku) transmitted by the communication server (SC), and
means (MS) for unlocking access to the medical data (DonM) by means of the key (Ku).

8. A call centre (CA) for accessing medical data (DonM) of a user saved in a mobile terminal (TM) of the user that issued an emergency call to a call centre (CA) over a telecommunications network (RT), **characterized in that** it comprises:
means for assigning an authorized person to the user, after having received an identifier (IdU) of the user transmitted from the mobile terminal (TM), and
means for transmitting an identifier (IdP) of the authorized person and the identifier (IdU) of the user to a communication server (SC) which generates a key (Ku) based on the identifier (IdP) of the authorized person and on the identifier (IdU) of the user and transmits the key (Ku) to the mobile terminal (TM) and to a terminal (TC) of the authorized person, in order to unlock access to the medical data (DonM) by means of the key (Ku).

9. A communication server (SC) for accessing medical data (DonM) of a user saved in a mobile terminal (TM) of the user that issued an emergency call to a call centre (CA) over a telecommunications network (RT), **characterized in that** it comprises:
means for generating a key (Ku) based on an identifier (IdP) of an authorized person and on an identifier (IdU) of the user transmitted from the call centre (CA), which assigned an authorized person to the user after having received the identifier (IdU) of the user transmitted from the mobile terminal (TM), and
means for transmitting the key (Ku) to the mobile terminal (TM) and to a terminal (TC) of the authorized person, in order to unlock access to the medical data (DonM) by means of the key (Ku).
